# EUROPEAN PATENT APPLICATION

(11) **EP 1 920 973 A2**
(43) Date of publication of application: **14.05.2008**
(21) Application number: 07380284.5
(22) Date of filing: 22.10.2007
(51) Int. Cl.: B60Q 1/56

(54) **Lighting system for a motor vehicle registration plate**

(30) Priority: 10.11.2006 ES 200602856
(71) Applicant: Maier, S. Coop., 48300 Gernika (ES)
(72) Inventor: Mandaluniz Bilbao, Joseba, 48300 Gernika (ES)
(74) Representative: Urteaga Simarro, José Antonio

(57) **Abstract**

Lighting system for a motor vehicle registration (license) plate (2), which comprises at least one light source (1) emitting a main beam (15) and secondary beams (16) of light. Each light source (1) is accompanied by a lens (3) for redistributing light, which comprises a series of surfaces (6, 7, 8, 9, 10, 11) that enable the main and secondary beams to be redistributed in a homogenous way on the entire surface of the registration plate (2) and without casting outside. The light sources (1) are preferably LEDs, thereby achieving a lighting system offering low electrical consumption and a long useful life.

## Description

### Technical field

The invention relates to a lighting system for a motor vehicle registration (license) plate.

### Prior art

Lighting of motor vehicle registration plates has traditionally been carried out by one or more bulbs located close to the registration plate (e.g. in the area below the rear hatch door, i.e. in the area of the hatch door where the hatch-door-opening handle is situated). However, the use of bulbs is gradually being replaced by the use of light-emitting diodes (LEDs), as they offer numerous advantages over bulbs. Firstly, LEDs have a longer useful life and lower consumption. Secondly, the light emitted by an LED is greater than the light emitted by a bulb at the same level of power consumption, i.e. an LED offers greater light efficiency than a bulb.

The lighting of a motor vehicle registration plate must be as uniform as possible on the entire surface of the registration plate so that the registration number is perfectly legible. There are in fact international regulations (currently, European, American and Japanese) that standardise registration plate sizes and regulate the amount of light a registration plate should receive in order to be correctly lit. In specific terms, this regulation involves the definition of a series of points distributed on the surface of the registration plate and the definition of a minimum level of light that must be cast on each point (in order to guarantee minimum lighting), in addition to the maximum relative difference in light between adjacent points (in order to guarantee uniform lighting).

Because the light emitted by LEDs is highly directional, the current known technical solutions incorporating LEDs for the lighting of a motor vehicle registration plate usually feature a transmission element designed to refract and disperse the light emitted by the LED so that it is cast more uniformly on the surface of the registration plate. In general, this transmission element is usually a transparent lens made of polycarbonate (PC), polymethylmethacrylate (PMMA) or another thermoplastic material. The lens is usually positioned between the LED and the plate, and has a special shape that adapts the ray of light emitted by the LED to the entire surface of the registration plate.

This invention aims to provide an alternative to the design of the motor vehicle registration plate lighting system based on the use of LEDs, it being capable of lighting a motor vehicle registration plate in accordance with the requirements of the international regulations currently in force, and offering at the same time low electrical consumption, increased light efficiency and a minimum number of components required for its manufacture.

### Brief description of the invention

It is an object of this invention to provide a lighting system for a registration plate provided with at least one LED, as a light source, and at least one lens, in order to project satisfactorily the light emitted by the LED towards the entire registration plate, with the specific feature that the inventive lens is designed to make use of substantially all the rays of light originating from the LED and directed towards the registration plate. For this purpose, the lens is designed taking into account that the LEDs usually available on the market offer a light emission that may be characterised by a Lambertian radiation pattern, according to which the distribution of the light emitted by the LED is such that the light is strongest in the central direction (zero angle) and decreases substantially in a symmetrical manner in lateral angles in accordance with the cosine of said angles. Thus, 80% of the light emitted by the LED is concentrated in a diffusion field of ±30° (hereinafter referred to as the "main beam"), whereas the remaining 20% of the light is emitted outside this diffusion field (hereinafter referred to as "secondary beams").

The lens used in the invention has an inner face that is closer to the light source and an outer face opposite the former, and oriented towards the registration plate, both faces being provided with certain embossments to divert the main and secondary light beams. The inner face comprises a cylindrical dome and a surface related to the upper part of the plate, whose function is to prevent the rays of light directed towards the upper part of the registration plate from escaping from it towards the exterior of the registration plate. The inner face also comprises collimation areas to divert the secondary beams towards the interior of the plate, using said secondary beams to light the upper area and the lower area of the registration plate and therefore preventing said secondary beams of light from being wasted. The outer face comprises a surface related to the lower part of the plate, whose function is to prevent the rays of light directed towards the lower part of the registration plate from escaping towards the exterior of the registration plate. The outer face also comprises central and lateral dispersion areas for distributing the light all along the width of the registration plate.

In this way, the invention achieves a uniform light that is adjusted to the surface of the registration plate, in addition to low-consumption lighting and other advantages connected to the use of LEDs as opposed to the use of bulbs.

### Brief description of the figures

Details of the invention can be seen in the accompanying non-limiting figures:
- Figure 1 shows a highly schematic front view of a registration plate lit by an embodiment of the invention.
- Figure 2 shows an example of the Lambertian radiation pattern of a LED.
- Figure 3 shows a lateral sectional view according to a cross-section through A-A of Figure 1.
- Figure 4 shows a top view of the preferred embodiment of the lens according to the invention.
- Figure 5 shows a bottom view of the preferred embodiment of the lens according to the invention.

### Detailed description of the invention

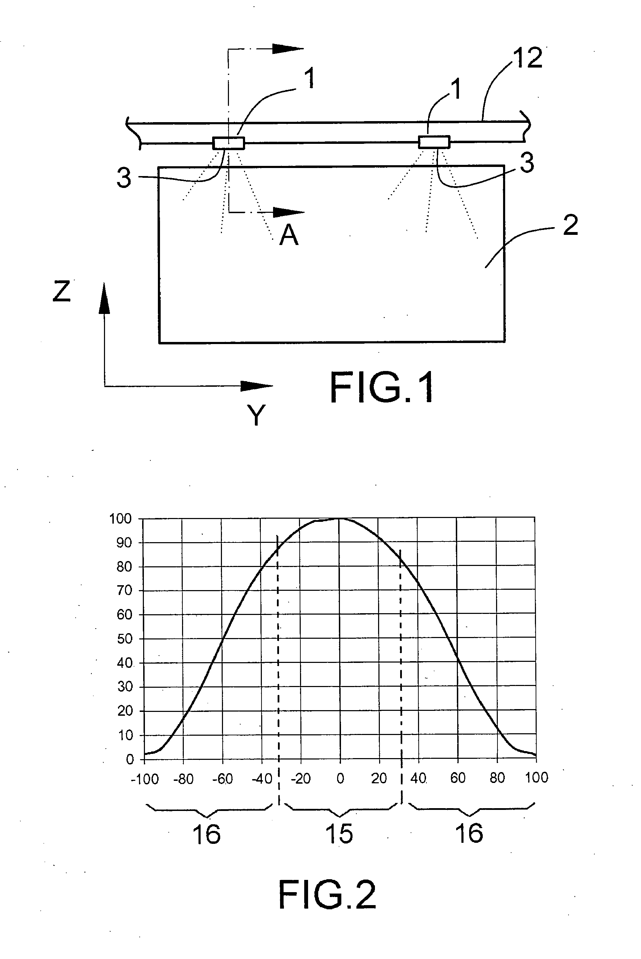

Figure 1 shows a schematic representation of a registration plate (2) lit by two light sources (1). The lighting system uses LEDs as a preferred light source, although other alternative light sources such as bulbs, etc. are considered. Although two light sources (1) are shown in the figures, the number of light sources may be variable, and in the event that more than one light source is used they may be electrically connected in series or parallel. If connected in series, priority will be given to electrical consumption, with the drawback that the light will be lost completely should one of the light sources fail. In the case of a parallel connection, the system consumes more electrical power but is not as vulnerable to faults in the light sources.

In the embodiment shown in the figure, the light sources (1) are installed in the handle (12) of the rear hatch door of the motor vehicle, specifically on a lower face of the handle (12), the lower face being oriented to a greater or lesser extent towards the registration plate (2). The invention is not restricted, however, to this type of assembly, and may present any other type of variation, such as having the lighting system assembled on the rear bumper of the motor vehicle or on another element, with the condition that it is correctly oriented towards the registration plate.

The figure shows and defines Y and Z-axes, which will be referred to throughout the description of the invention. The Y-axis extends in the substantially horizontal direction of the registration plate (2) and the Z-axis extends in the substantially vertical direction of the same.

Figure 2 shows an example of the Lambertian radiation pattern of an LED, where the light emission angles of the LED are represented on the abscissa and the amount of relative light (%) emitted by the LED is represented on the ordinate. As can be seen, the light is distributed in such a way that the LED emits the main beam of light in a main diffusion field (±30 or 40°) or main beam (15), and a smaller amount of light in the remaining lateral angles or secondary beams (16), approximately symmetrical and in accordance with the cosine of the angle.

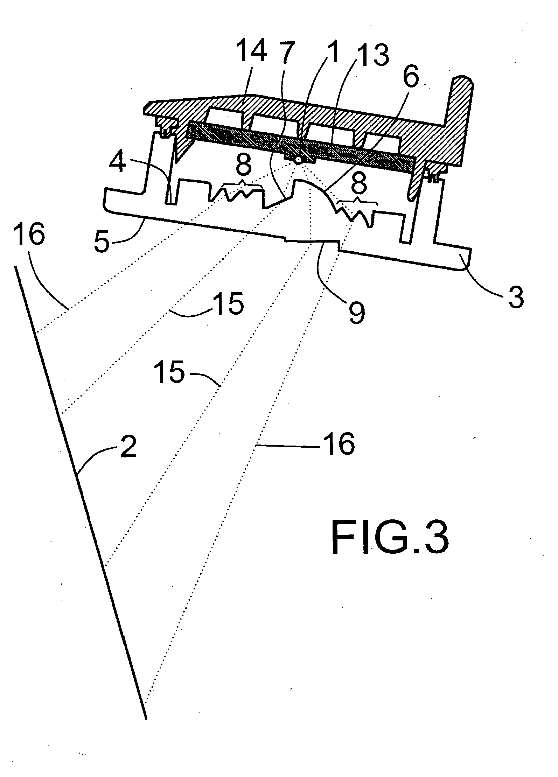

Figure 3 shows a lateral sectional view of the lighting system of Figure 1 according to a cross-section through A-A. The lighting system is positioned above the registration plate (2), and comprises the aforementioned light source (1) and a lens (3) connected to the light source (1). The lens (3) is situated between the light source (1) and the registration plate (2), logically very close to the light source (1). The lens (3) is provided with an inner face (4) closer to the light source (1) and an outer face (5) less close to the light source (1) and oriented towards the registration plate (2).

The light source (1) emits a majority of the light in a main beam (15) and a minority of the light in secondary beams (16), as is the case with the LEDs available on the market. In order to project this type of light in a suitable and efficient manner on the registration plate (2), the lens (3) comprises a series of refracting and distributing embossments.

Firstly, the inner face (4) comprises a cylindrical dome (6) in order to distribute substantially all the main beam (15) of the light source (1) substantially in the direction of the Z-axis of the registration plate (2). The figure shows the cylindrical dome (6) in cross-section (i.e. it is shown with a circular profile). The cylindrical dome (6) is incomplete (it does not constitute a complete semi-circumference) and is ended on a surface related to the upper part of the registration plate (7), whose function is to prevent the rays of light directed towards the upper part of the registration plate (2) from escaping out to the exterior of the registration plate (2). In other words, the surface related to the upper part of the registration plate (7) acts as a barrier, preventing the area over and outside the registration plate (2) from being lit. In addition, the inner face (4) comprises collimation areas (8) in order to reorient the secondary beams (16) towards the interior of the registration plate (2) substantially in the direction of the Z-axis, thereby preventing the secondary beams from lighting areas outside the registration plate (2).

Secondly, the outer face (5) of the lens (3) comprises a surface related to the lower part of the registration plate (9) whose function is to prevent the rays of light directed towards the lower part of the registration plate (2) from escaping to the exterior of the registration plate (2). In other words, the surface related to the lower part of the registration plate (9) acts as a barrier, preventing the under and outside the registration plate (2) from being lit.

In the preferred embodiment of the invention shown in Figure 3, the light source (1) is an LED connected to a printed circuit board or PCB (13). The PCB (13) is housed between the lens (3) and a casing (14). The lens (3) and casing (14) are in turn connected to the handle of the rear hatch door or to whatever area of the motor vehicle the lighting system is installed in.

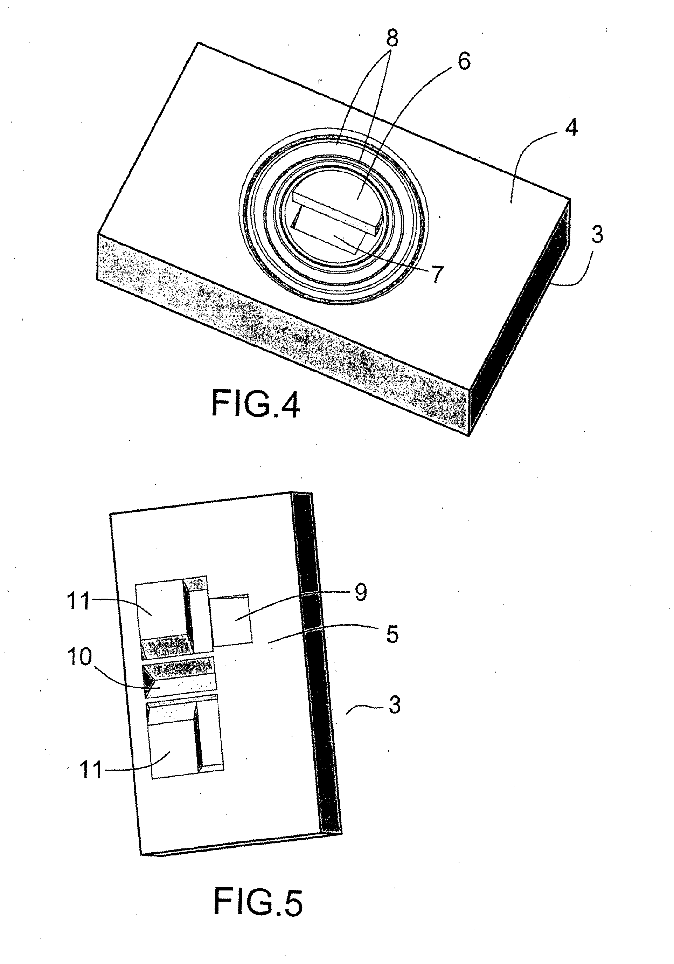

Figure 4 shows a top view of the lens (3), in which the inner face (4) provided with the cylindrical dome (6), the surface related to the upper part of the registration plate (7) and the collimation areas (8) can be seen.

Figure 5 shows a bottom view of the lens (3), in which the outer face (5) can be seen. The outer face (5) is provided with a central dispersion area (10) and lateral dispersion areas (11), designed to disperse all the light that arrives from the inner face (4) - be it a main beam (15) or a secondary beam (16) - all along the width of the registration plate (2), i.e. in the direction of the Y-axis. Specifically, the central dispersion area (10) distributes the light towards the central points of the registration plate (2) in the direction of the Y-axis, while the lateral dispersion areas (11) distribute the light towards the sides of the registration plate (2) in the direction of the Y-axis.

Optionally, the inner face (4) and/or the outer face (5) of the lens (3) may present a textured surface finish in order to achieve an even more uniform lighting of the registration plate (2), thereby eliminating possible "ray" effects (more brightly lit areas) associated with the fact that the light emitted by the LEDs is highly directional and not omni-directional.

## Claims

1. Lighting system for lighting a motor vehicle registration plate (2), which comprises at least one light source (1) and a lens (3) related to the light source (1), where the light source (1) emits a majority of light in a main beam (15) and a minority in secondary beams (16), where the registration plate (2) is defined along a substantially horizontal Y-axis and a substantially vertical Z-axis, **characterised in that**:
- the lens (3) comprises an inner face (4) and an outer face (5),
- the inner face (4) comprises a cylindrical dome (6) in order to distribute the main beam (15) of the light source (1) substantially in the direction of the Z-axis of the registration plate (2),
- the outer face (5) comprises a central dispersion area (10) in order to distribute the light towards the central area of the registration plate (2) in the direction of the Y-axis.

2. Lighting system according to claim 1, wherein the inner face (4) comprises at least one collimation area (8) in order to reorient the secondary beams (16) towards the interior of the registration plate (2) substantially in the direction of the Z-axis.

3. Lighting system according to claim 1, wherein the inner face (4) comprises a surface related to the upper part of the registration plate (7), in order to prevent the light directed towards the upper part of the registration plate from escaping out towards the exterior of the registration plate (2).

4. Lighting system according to claim 3, wherein the cylindrical dome (6) is incomplete and is ended with said surface related to the upper part of the registration plate (7).

5. Lighting system according to claim 1, wherein the outer face (5) comprises at least one lateral dispersion area (11) in order to distribute the light towards the sides of the registration plate (2) in the direction of the Y-axis.

6. Lighting system according to claim 1, wherein the outer face (5) comprises a surface related to the lower part of the registration plate (9), in order to prevent the light directed towards the lower part of the registration plate from escaping out towards the exterior of the registration plate (2).

7. Lighting system according to claim 1, wherein the light source (1) is an LED.

8. Lighting system according to claim 1, wherein it comprises two light sources (1) integrated in the handle of the rear hatch door of the motor vehicle.

9. Lighting system according to claim 1, wherein the light sources (1) are connected in series.

10. Lighting system according to claim 1, wherein the light sources (1) are connected in parallel.

11. Lighting system according to claim 1, wherein the inner face (4) of the lens (3) presents a textured surface finish.
